# EUROPEAN PATENT APPLICATION

(11) **EP 1 324 223 A2**
(43) Date of publication of application: **02.07.2003**
(21) Application number: 02025868.7
(22) Date of filing: 19.11.2002
(51) Int. Cl.: G06F 17/30

(54) **Apparatus and method for searching multimedia objects**

(30) Priority: 29.12.2001 KR 2001088263
(71) Applicant: LG ELECTRONICS INC., Seoul (KR)
(72) Inventor: Lee, Jin Soo, Songpa-gu, Seoul (KR); Kim, Heon Jun, Seongnam-si, Gyeonggi-do (KR)
(74) Representative: Vetter, Ewald Otto

(57) **Abstract**

The present invention discloses an apparatus and method for searching a multimedia object which can simplify communication processes for the search by adding a feature description information database which exists in a server to a mobile terminal in the multimedia search of a server-client environment, especially a wireless communication environment. It is thus possible to efficiently use the system and cut down communication expenses.

## Description

### BACKGROUND OF THE INVENTION

### 1. Field of the Invention

The present invention relates to an apparatus and method for searching a multimedia object using content-based information, and in particular, to an apparatus and method for searching a multimedia object in a server-client environment.

### 2. Background of the Related Art

A content-based multimedia search system searches a corresponding object by analyzing text information such as keywords as well as content-based information such as colors and textures.

In a content-based image search system, most of image search engines use color, texture and shape information. A variety of methods are used to express each of information. For example, in the case of colors, a color histogram representing the entire color distribution, a representative color representing frequent colors and a color layout representing representative colors by partial areas can be used as information for expressing colors. Such information can influence a search performance. Accordingly, most of the researches have been focused on development of feature information for improving search results. Feature information for content-based search and meta information such as keywords are called 'description' (hereinafter, referred to as 'feature description information'). In order to search images, the feature description information of the respective images is compared, and the images having similar feature description information are designated as results of the search. The feature description information is extracted in advance and stored, and includes index information for high speed search.

In general, the search is divided according to a type of query used for the search, for instance a query by examples, a query by user sketches and a query by texts An exemplary query by texts is a keyword search and remaining two types of queries are the content-based searches.

In the search using the query by examples, a user presents a query by an object similar to an object that he/she intends to search, and a search system searches objects including feature description information most similar to the feature description information included in the object presented as the query. Here, when the query example is an object whose feature description information has been already extracted, the search system detects the feature description information of the corresponding object in a database, and searches objects having similar feature description information. In the case that the query example is a new object whose feature description information is not extracted, the search system extracts the feature description information of the given object by using an extraction engine, and searches objects having similar feature description information in the database.

In the search using the query by user sketches, the user directly produces a query image to fully express a desired object. Here, the extraction engine in the search system extracts feature description information of the query image produced by the user.

In general, the search can be performed in one system where a server and a client are not divided or in a system model including a client for performing the search and a server having real data, feature description information and an index under the server-client concept. For example, the former is to search a personal digital album in a PC by using the PC, and the latter is to connect a digital album stored in a PC to a mobile terminal such as PDA and search the digital album. Here, the server is the PC and the client is the PDA.

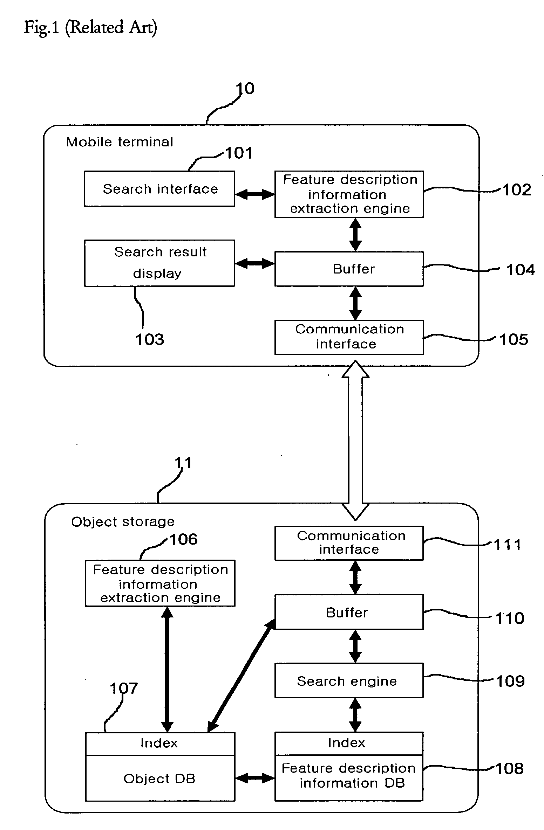

Fig. 1 shows a server-client system model for general search.

A mobile terminal 10 and an object storage 11 are connected in a communication environment. The mobile terminal 10 in the client includes a search interface 101 for query, a feature description information extraction engine 102 for extracting feature description information from the object used for query, a display 103 for displaying search results, a buffer 104 for processing data, and a communication interface 105 for communication with the object storage 11. The feature description information of the query object is transmitted to the object storage 11 in the server including objects subject to the search, and compared and searched by the search engine.

The object storage 11 in the server has a feature description information extraction engine 106 for extracting feature description information of a multimedia object, a DB 107 for storing objects, a DB 108 for storing the feature description information, a search engine 109 for comparing the feature description information and searching the corresponding object, a buffer 110 for search and data communication, and a communication interface 111 for communication with the mobile terminal.

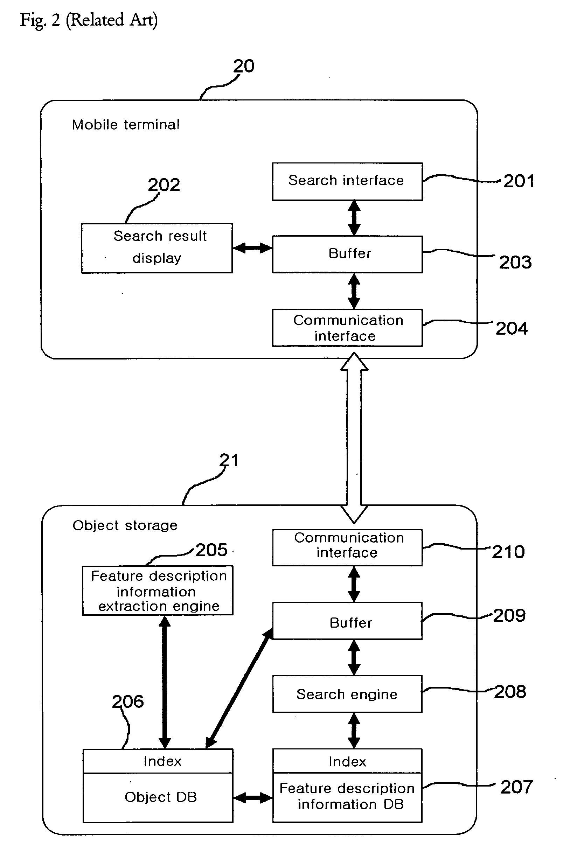

Fig. 2 shows another example of the server-client system model for general search where a feature description information extraction engine is included merely in a server. As described above, a mobile terminal 20 has a search interface 201, a search result display 202, a buffer 203 and a communication interface 204. An object storage 21 has a feature description information extraction engine 205, an object DB 206, a feature description information DB 207, a search engine 208, a buffer 209 and a communication interface 210.

When the feature description information extraction engine 205 is formed merely in the server, the query object itself is transmitted from the mobile terminal 20 to the object storage 21 in the server, and the feature description information of the query object is extracted if necessary. It is advantageous that the client needs not to include the feature description information extraction engine differently from Fig. 1. However, since the feature description information is generally smaller than the original object, a large volume of objects must be transmitted.

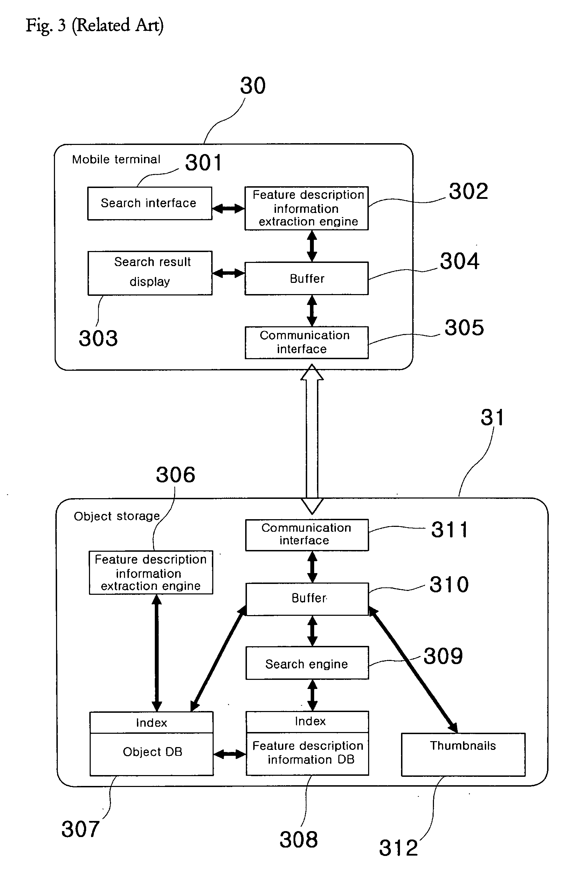

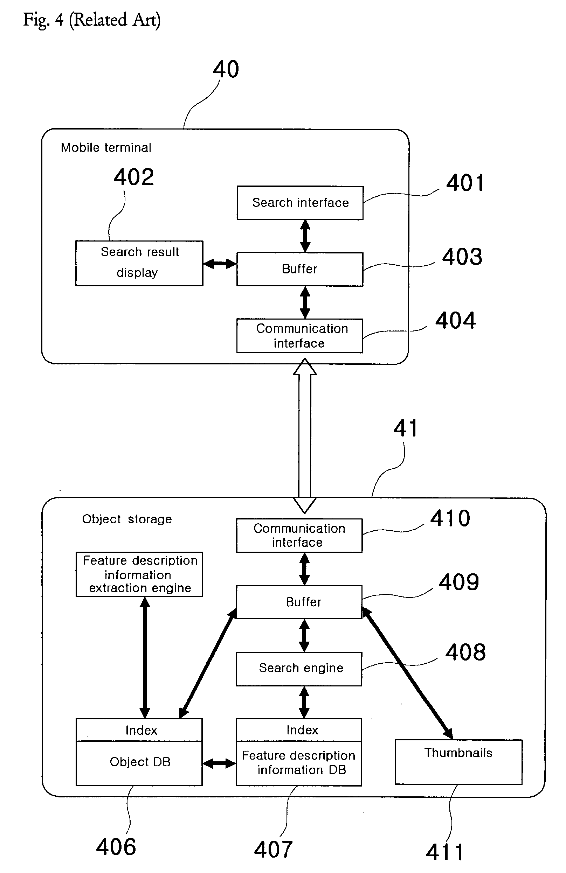

Generally in the image search as shown in Figs. 3 and 4, the server includes thumbnails corresponding to each object and uses them to display search results. The thumbnail is a reduced image of the original image. In order to confirm whether a certain object is the right object that the user intends to search, the thumbnail is used instead of the original image. Using the original size of image increases a transmission volume. Accordingly, the thumbnail is used to store a small volume of objects in a memory to display a few search results.

The server-client system model of Fig. 3 is similar to Fig. 1. That is, a mobile terminal 30 includes a search interface 301, a feature description information extraction engine 302, a search result display 303, a buffer 304 and a communication interface 305. An object storage 31 includes a feature description information extraction engine 306, an object DB 307, a feature description information DB 308, a search engine 309, a buffer 310, a communication interface 311 and thumbnails 312.

The server-client system model of Fig. 4 is similar to Fig. 2. That is, a mobile terminal 40 includes a search interface 401, a search result display 402, a buffer 403 and a communication interface 404. An object storage 41 includes a feature description information extraction engine 405, an object DB 406, a feature description information DB 407, a search engine 408, a buffer 409, a communication interface 410 and thumbnails 411.

The server-client system models of Figs. 3 and 4 should transmit the feature description information and thumbnail through the wireless communication, to generate communication load and expenses.

As explained above, in the general search, interactions are required to transmit the feature description information of the query object to the server during the search, receive the primary results from the server, and allow the user to confirm the results and resume the search. Therefore, in the server-client environment, while the interactions occur, communication is executed. Until now, most of the searches have been performed in the server-client environment using a wire Internet. However, the server-client communication environment has been recently changed to wireless communication due to the development of the mobile communication environment and the activation of multimedia services using mobile terminals. The wireless communication provides poorer network environment than the wire communication. Since a communication fee is high, the user preferably refrains from unnecessary communication. However, the search requires the communication time for searching a desired object as well as the transmission time of the desired object, which increases a load of the user. So, it is necessary to resolve this problem.

According to the generalization of an acquisition means of digital multimedia objects such as a digital camera, the user can build a personal library in a personal storage space such as PC The personal library can be connected to the mobile terminal so that the user can externally search it and display results. In this case, while the user is searching a desired object, he/she should perform the wireless communication with the PC storing the library. Accordingly, communication loads and expenses are increased.

### SUMMARY OF THE INVENTION

An object of the invention is to solve at least the above problems and/or disadvantages and to provide at least the advantages described hereinafter.

Accordingly, one object of the present invention is to solve the foregoing problems by providing an apparatus and method for searching a multimedia object, which can efficiently use a wireless communication environment and reduce loads by minimizing communication processes between a client and a server, when searching the multimedia object in a server-client environment.

The foregoing and other objects and advantages are realized by providing an apparatus for searching a multimedia object, comprising: a separated storage including objects subject to the search; and a terminal including feature description information database for content-based search, a search engine for performing search by using at least one of the feature description information and index, a search interface for performing at least one of the query and the confirmation of search results, and a communication interface for receiving the feature description information, index and wanted result from the separated storage, which is provided for performing the search without communicating with the separated storage, and receiving the desired result from the separated storage.

According to another aspect of the invention, a method for searching a multimedia object includes the steps of: acquiring the multimedia object; storing the acquired multimedia object in an object storage; extracting feature description information required to search the multimedia object, and updating an index by using the extracted feature description information; storing the extracted feature description information and the index in a terminal through communication; performing the search by using the terminal on the basis of the stored feature description information and index; and receiving a desired object of the user among the search results from the object storage through the communication.

According to another aspect of the invention, a method for searching a multimedia object includes the steps of: acquiring the multimedia object; extracting feature description information required to search the acquired multimedia object, and updating an index by using the extracted feature description information; transmitting the acquired multimedia object to an object storage through the communication, and storing it in the object storage; describing connection information for connecting the object stored in the object storage to the feature description information in the feature description information; performing the search by using a terminal on the basis of the feature description information, index and connection information; and receiving a desired object of the user among the search results from the object storage through the communication.

Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.

### BRIEF DESCRIPTION OF THE DRAWINGS

The invention will be described in detail with reference to the following drawings in which like reference numerals refer to like elements wherein:
Fig. 1 is a block diagram illustrating a first example of a conventional apparatus for searching an multimedia object in a server-client environment;
Fig. 2 is a block diagram illustrating a second example of the conventional apparatus for searching the multimedia object in the server-client environment;
Fig. 3 is a block diagram illustrating a third example of the conventional apparatus for searching the multimedia object in the server-client environment;
Fig. 4 is a block diagram illustrating a fourth example of the conventional apparatus for searching the multimedia object in the server-client environment;
Fig. 5 is a block diagram illustrating an apparatus for searching a multimedia object in a server-client environment in accordance with a first embodiment of the present invention;
Fig. 6 is a block diagram illustrating an apparatus for searching a multimedia object in the server-client environment in accordance with a second embodiment of the present invention;
Fig. 7 is a flowchart showing a method for searching a multimedia object in accordance with the first embodiment of the present invention; and
Fig. 8 is a flowchart showing a method for searching a multimedia object in accordance with a second embodiment of the present invention.

### DETAILED DESCRIPTION OF PREFERRED EMBODIMENTS

The following detailed description will present an apparatus and method for searching a multimedia object according to preferred embodiments of the invention in reference to the accompanying drawings.

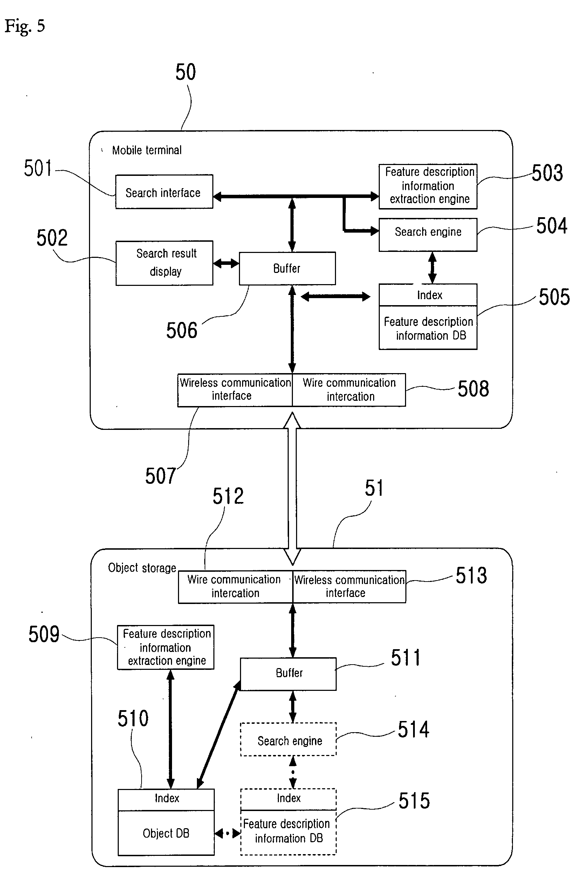

Fig. 5 is a block diagram illustrating an apparatus for searching a multimedia object in a server-client environment in accordance with a first embodiment of the present invention.

Referring to Fig. 5, a mobile terminal 50 includes a search interface 501 for query, a display 502 for confirming search results, a feature description information extraction engine 503 for extracting feature description information, a search engine 504 for search, an index and feature description information DB 505, a buffer 506, and a wireless communication interface 507 and a wire communication interface 508 for communication with an object storage.

An object storage 51 has a feature description information extraction engine 509 for extracting feature description information of the multimedia object, an index and object DB 510, a buffer 511, and a wire communication interface 512 and a wireless communication interface 513 for communication with the mobile terminal. The server storing the original object further includes index and feature description information DB 515 included in the terminal and a search engine 514. Accordingly, if necessary, the server itself can perform the search.

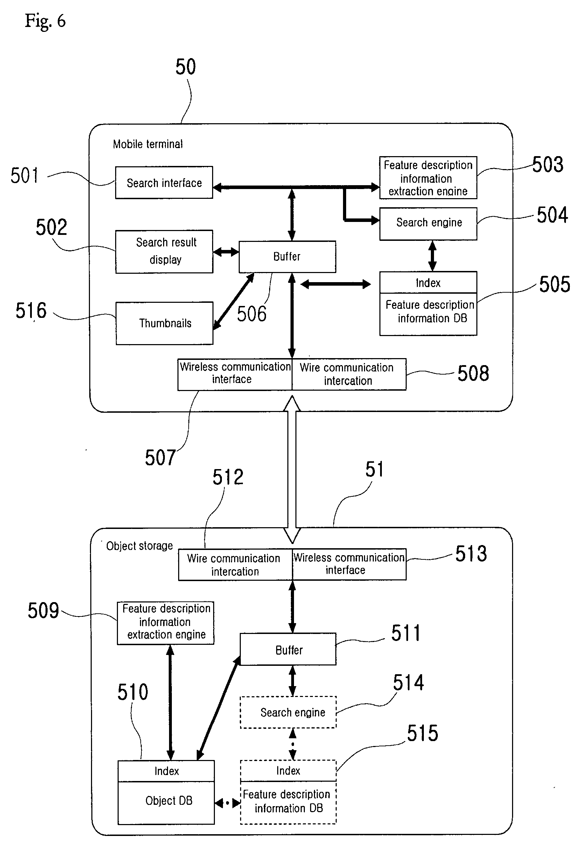

Fig. 6 is a block diagram illustrating an apparatus for searching a multimedia object in the server-client environment in accordance with a second embodiment of the present invention. Same drawing reference numerals are used for the same elements in Figs. 5 and 6, and explanations thereof are omitted. Here, the mobile terminal 50 includes thumbnails 516. When the search results are displayed, the thumbnail is used instead of the original image, thereby cutting down communication expenses.

In the systems shown in Figs. 5 and 6, the communication is performed only when the user finally acquires a desired result through the search.

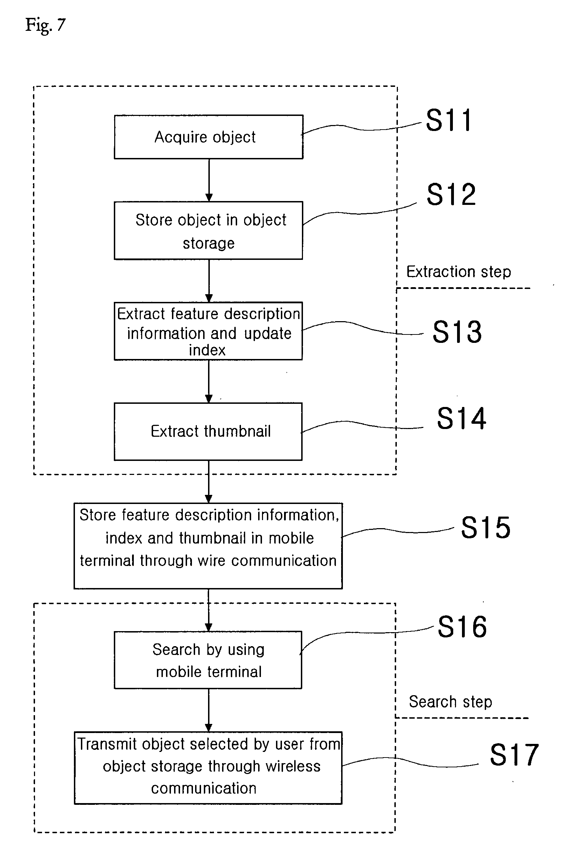

An object acquisition and search process using the above-described system is divided into an object extraction step and an object search step as shown in Fig. 7.

When an object such as an image is acquired, it is transmitted to the object storage 51 and stored therein (S11 and S12). Here, the object can be acquired by various acquisition means including a digital camera and a PDA with a camera. The object storage 51 storing the object is a large capacity of separated storage such as a PC or DVR (digital video recorder). After the object is stored, the feature description information is extracted for search (S13). If necessary, the thumbnail is simultaneously extracted (S14). An index for high speed search is updated by reflecting a value of the feature description information.

The aforementioned process (S11-S14) will now be explained with reference to the system of Fig. 5 (or Fig. 6). The object acquired by using the object acquisition means is transmitted to the object storage 51 through the wire or wireless communication interface 512 or 513, and stored in the object DB 510 through the buffer 511. Thereafter, the feature description information extraction engine 509 is activated to extract the feature description information of the object, and the feature description information is stored in the corresponding DB 515. If necessary, the thumbnail 516 is simultaneously extracted and stored.

On the other hand, when the user wants or periodically, the information required for the search such as the feature description information, index and thumbnail is transmitted to the mobile terminal 50 and stored therein by using the wire communication interfaces 512 and 508 (S15). That is, the information is transmitted from the object storage 51 to the mobile terminal 50 through the wire communication interfaces 512 and 508, and stored in the index and feature description information DB 505 via the buffer 506.

When the user starts the search by query by using the search interface 501, the search is performed in the mobile terminal. When the user selects a desired result, a desired object is transmitted from the object storage to the mobile terminal through the wireless communication (S16 and S17).

That is, when the user performs the search by query by using the search interface 501, if the query object does not include the feature description information, the feature description information extraction engine 503 is activated to extract the feature description information of the corresponding query object, and the search engine 504 is activated to perform the search on the basis of the information of the index and feature description information DB 505. The search results are displayed on the search result display 502. When the user selects a desired result, the desired object of the user is transmitted from the object DB 510 of the object storage 51 to the mobile terminal 50 through the wireless communication interfaces 507 and 513.

In Fig. 7, the acquired object is stored through the wire communication and the search result is transmitted through the wireless communication. However, it can be varied upon the server-client communication environment.

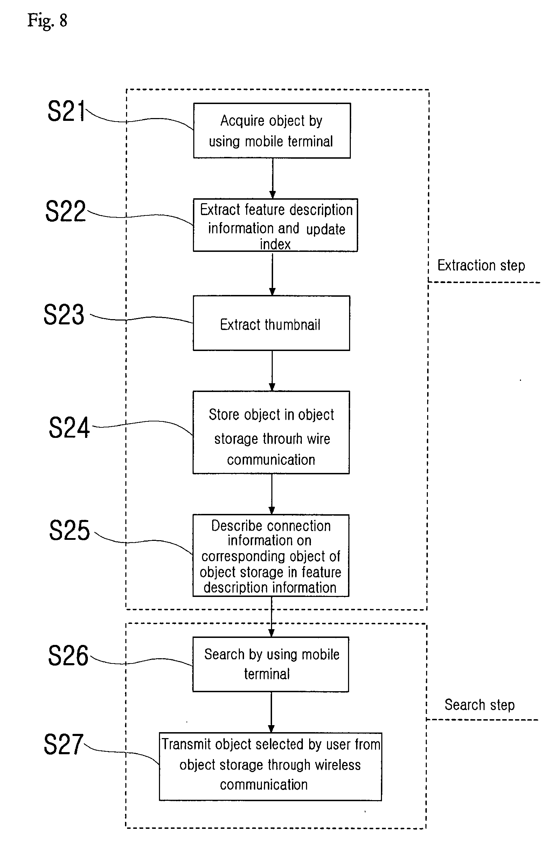

If the object acquisition means is limited to the mobile terminal for performing the search, when the object is acquired by the mobile terminal, the feature description information included in the mobile terminal is extracted, the index is updated, and the thumbnail is extracted. After the extraction step, the acquired object is transmitted to the object storage through the wire communication and stored therein, and the connection information using a stored address is described in the feature description information, thereby embodying the above-described search system. This process is shown in Fig. 8.

As depicted in Fig. 8, the object is acquired by using the mobile terminal 50 (S21), the feature description information is extracted (S22), and the thumbnail is extracted (S23). Thereafter, the acquired object is transmitted to the object storage 51 through the wire communication and stored therein (S24). The connection information on the object of the object storage 51 is described in the feature description information (S25). Identically to the search step of Fig. 7, when the user performs the search by query by using the search interface 501, if the query object does not include the feature description information, the feature description information extraction engine 503 is activated to extract the feature description information of the query object, and the search engine 504 is driven to perform the search on the basis of the information of the index and feature description information DB 505 (S26). The search results are displayed in the search result display 502. When the user selects a desired result, the desired result of the user is transmitted from the object DB 510 of the object storage 51 to the mobile terminal 50 through the wireless communication interfaces 507 and 513 (S27).

It should be recognized that a communication interface between storages is necessary to embody the server-client system model of the invention. The system requires a means for fetching the feature description information, index and thumbnail from the server through the wire or wireless communication periodically or when the user wants. Recently, most of the mobile terminals provide an interface connectable to the PC, thereby solving this problem.

In addition, the connection information between the feature description information and the real object must be taken into consideration. The standards for the feature description information have been obtained by MPEG-7 activities. According to the MPEG-7 standards, feature description information has the connection information connecting the corresponding objects.

As discussed earlier, in accordance with the present invention, the database storing the feature description information is included in the terminal. While the general search requires a few wireless communications between the terminal and the server, the search is performed in the terminal and the wireless communication is executed only when the terminal receives the object corresponding to the search result from the server. As a result, it is possible to efficiently employ the search apparatus and reduce wireless communication expenses.

While the invention has been shown and described with reference to certain preferred embodiments thereof, it will be understood by those skilled in the art that various changes in form and details may be made therein without departing from the spirit and scope of the invention as defined by the appended claims.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structures described herein as performing the recited function and not only structural equivalents but also equivalent structures.

## Claims

1. An apparatus for searching a multimedia object, comprising:
a separated object storage including objects subject to the search; and
a terminal performing the search without communicating with the separated storage and receiving the desired result from the separated storage, wherein the terminal includes a feature description information database for content-based search, a search engine for performing search by using at least one of the feature description information and index, a search interface for performing at least one of the query and the confirmation of search results, and a communication interface for receiving the feature description information, index and wanted result from the separated storage.

2. The apparatus according to claim 1, wherein the object storage comprises:
an object storing unit for storing the multimedia object which is a search object and the index;
a feature description information extraction engine for extracting the feature description information from the object;
a communication interface for transmitting the feature description information and the multimedia object to the terminal; and
a buffer for processing data of the object storage.

3. The apparatus according to claim 1, wherein the terminal comprises:
a storing unit for storing the feature description information of the search object and the index from the object storage;
a search interface for query;
a feature description information extraction engine for extracting the feature description information of the query object;
a search engine for performing the search by using the feature description information and index;
a display for confirming the search results;
a buffer for processing data of the terminal; and
a communication interface for communication with the object storage.

4. The apparatus according to claim 2 or 3, wherein the object storage further comprises:
a storing unit for storing the feature description information of the search object and the index; and
a search engine for performing the search by using the feature description information and index, whereby the object storage performs the search in the same manner as the terminal.

5. The apparatus according to at least one of claims 2 to 4, wherein the communication interface comprises:
a wireless communication interface for receiving a wanted result from the separated storage; and
a wire communication interface for transmitting the feature description information and index from the separated storage in advance and storing them.

6. The apparatus according to claim 1, further comprising thumbnails for displaying the search results to the user.

7. The apparatus according to claim 1 or 6, wherein the feature description information comprises connection information of each object in order to transmit the corres ponding object stored in the separated storage.

8. The apparatus according to claim 1, 6 or 7, wherein the terminal is a mobile terminal, the separated object storage is a personal computer (PC), and the search between th e mobile terminal and the PC is performed through the wire and wireless communication.

9. A method for searching a multimedia object, comprising the steps of:
acquiring the multimedia object;
storing the acquired multimedia object in an object storage;
extracting feature description information required to search the multimedia object, and updating an index by using the extracted feature description information;
storing the extracted feature description information and the index in a terminal through communication;
performing the search by using the terminal on the basis of the stored feature description information and index; and
receiving a desired object of the user among the search results from the object storage through the communication.

10. The method according to claim 9, further comprising the steps of:
extracting a thumbnail; and
storing the extracted thumbnail in the terminal through the communication.

11. The method according to claim 9 or 10, wherein the terminal is a mobile terminal, and the search between the mobile terminal and the object storage is performed thr ough the wire or wireless communication.

12. A method for searching a multimedia object, comprising the steps of:
acquiring the multimedia object;
extracting feature description information required to search the acquired multimedia object, and updating an index by using the extracted feature description information;
transmitting the acquired multimedia object to an object storage through the communication, and storing it in the object storage;
describing connection information for connecting the object stored in the object storage to the feature description information in the feature description information; performing the search by using a terminal on the basis of the feature description information, index and connection information; and
receiving a desired object of the user among the search results from the object storage through the communication

13. The method according to claim 12, further comprising a step of extracting a thumbnail.

14. The method according to claim 12 or 13, wherein the terminal is a mobile terminal, and the search between the mobile terminal and the object storage is performed thr ough the wire or wireless communication.
